# EUROPÄISCHE PATENTANMELDUNG

(11) **EP 4 755 980 A1**
(43) Veröffentlichungstag der Anmeldung: **10.06.2026**
(21) Anmeldenummer: 25220397.1
(22) Anmeldetag: 03.12.2025
(51) Int. Cl.: C09D 5/00

(54) **AUF EINEM ACRYLAT BASIERENDER LACK ODER FARBE ZUR AUFTRAGUNG AUF OBERFLÄCHEN**

(30) Priorität: 06.12.2024 DE 102024136463; 30.10.2025 DE 202025106575 U
(71) Anmelder: Höpner Lackmanufaktur GmbH, 02906 Niesky (DE)
(72) Erfinder: Schäfer, Michael, 02906 Niesky (DE)
(74) Vertreter: Hannke Bittner & Partner mbB Regensburg

(57) **Zusammenfassung**

Auf einem Acrylat basierender Lack oder Farbe (100) zur Auftragung auf Oberflächen als ein Hitze-, Kälte-, Bakterien-, Viren- und/oder Lotuseffekt- Schutzschicht, umfassend zumindest ein Basismittel in flüssiger oder zähflüssiger Form, zum Beispiel Wasser, in welchem Acrylatpartikel zur Bildung einer Dispersion oder eines Dispersionsgemisches eingefügt sind, dadurch gekennzeichnet, dass die Dichte des Lackes oder der Farbe zwischen 1,01 g/cm3 und 1,1 g/cm3 liegt und die Shore A-Härte zwischen 65% und 71% liegt und der Haftungswiderstand zwischen 63% und 72% liegt und die Wärmeleitfähigkeit zwischen 0,07 W/mK und 0,11 W/mK liegt und/oder der Lack oder die Farbe wenigstens einen Duftstoff enthält.

## Beschreibung

Die vorliegende Erfindung bezieht sich auf einen Acrylat basierenden Lack oder Farbe zur Auftragung auf Oberflächen als eine Hitze-, Kälte-, Bakterien-, Viren- und/oder Lotuseffektschutzschicht sowie auf ein Verfahren zum Aufbringen eines Lackes und/oder einer Farbe und zudem auch eine Verwendung des Lackes oder der Farbe gemäß den jeweiligen Oberbegriffen der Patentansprüche.

In Zeiten des Klimawandels besteht großer Bedarf an einer gezielten Temperierung von Innenräumen. Dabei soll entweder in Zeiten des Herbstes oder des Winters möglichst wenig Wärme nach außen in die Umgebung abgegeben werden oder aber während Zeiten großer Hitze soll die auf Häuser, insbesondere deren Dächer einstrahlende, Wärmeenergie möglichst am Haus reflektiert oder zumindest teilweise absorbiert werden, jedenfalls nicht oder zumindest zu einem großen Teil nicht in den Innenraum abgegeben werden. Durch die hier beschriebene Erfindung kann insbesondere auf eine Heizung und/oder Klimaanlage entweder verzichtet sein, oder aber die Heizung und/oder Klimaanlage muss nicht entsprechend hoch geregelt werden. Dies bringt eine unmittelbare, erhebliche Energieersparnis mit sich.

Eine Aufgabe der vorliegenden Erfindung ist es daher, einen, auf einem Acrylat basierenden Lack oder Farbe zur Auftragung auf Oberflächen als eine Hitze-, Kälte-, Bakterien-, Virenund/oder Lotuseffektschutzschicht anzugeben, bei welchem in besonders einfacher Art und Weise eine Temperierung von Innenräumen in einem Wohngebäude vornehmbar ist.

Eine mögliche Variable kann eine Schichtdicke des Lackes oder der Farbe sein, welche eine stärkere Absorption- oder Reflektionswirkung auf Sonneneinstrahlung oder sonstige Wärmeeinstrahlung aufweist. Vorzugsweise ist dieser Effekt größer, je größer die Schichtdicke des Lackes oder der Farbe ist. Entsprechendes gilt für eine von durch die Schicht erzeugten Isolationseffekt, um Innenräume möglichst warm zu halten.

"Auf einem Acrylat basierender Lack oder Farbe" bedeutet im Zusammenhang der Erfindung, einen Lack oder eine Farbe, welcher ein Acrylat aufweist.

In zumindest einer Ausführungsform handelt es sich dabei um einen Lack oder um eine Farbe, insbesondere um einen Acrylatlack oder eine um eine Acrylatfarbe. Neben dem Acrylat kann in dem Lack oder Farbe jedoch weitere Stoffe, insbesondere auch zur Einstellung von Reflektions- oder Absorptionseigenschaften des Lackes oder der Farbe beigegeben sein.

Derartige Lacke oder Farben emittieren insbesondere in der Zeit nach ihrer Auftragung teilweise unangenehme Gerüche, bzw. Gerüche, die von Personen als unangenehm befunden werden. Der Erfindung liegt daher die Aufgabe zugrunde derartige Geruchsbeeinträchtigungen zumindest in der Anfangszeit nach der Anbringung der Farbe oder des Lackes zu verringern oder zu vermeiden.

Dies wird durch einen Lack oder eine Farbe nach dem unabhängigen Anspruch erreicht. Vorteilhafte Ausführungsformen und Weiterbildungen sind Gegenstand der Unteransprüche.

Ein erfindungsgemäßer auf einem Acrylat basierender Lack oder eine Farbe zur Auftragung auf Oberflächen als ein Hitze-, Kälte-, Bakterien-, Viren- und/oder Lotuseffekt- Schutzschicht, weist zumindest ein Basismittel in flüssiger oder zähflüssiger Form, zum Beispiel Wasser auf, in welchem Acrylatpartikel zur Bildung einer Dispersion oder eines Dispersionsgemisches eingefügt sind.

Erfindungsgemäß enthält der Lack oder die Farbe wenigstens einen Duftstoff.

Es wird daher im Rahmen der Erfindung vorgeschlagen, dass dem Lack oder der Farbe ein weiterer Duftstoff zugesetzt ist, der zumindest dazu beiträgt, als unangenehm empfundene Gerüche, welche von dem Lack oder von der Farbe selbst ausgegeben werden zu vermindern. Auf diese Weise soll erreicht werden, dass durch den Nutzer nur oder im Wesentlichen der Geruch des Duftstoffes wahrgenommen wird, der den Geruch des Lackes oder der Farbe an sich bevorzugt überdeckt.

Bei einer bevorzugten Ausführungsform ist der Duftstoff dem Basismittel zugesetzt. Besonders bevorzugt ist der Duftstoff in das Basismittel eingerührt. So ist es im Rahmen der Herstellung möglich, dass zunächst der Duftstoff in das Basismittel eingerührt wird und anschließend die Acrylatpartikel zugesetzt werden.

Bei einer weiteren bevorzugten Ausführungsform handelt es sich bei dem Duftstoff um einen flüssigen Duftstoff. Besonders bevorzugt weist der Duftstoff einen Brechungsindex (bei 20°C) auf, der zwischen 1,4 und 1,5, bevorzugt zwischen 1,41 und 1,48, bevorzugt zwischen 1,42 und 1,46 und besonders bevorzugt zwischen 1,43 und 1,45 liegt (bestimmt jeweils gem. Ph.Eur.2.2.6_nD20).

Bei einer weiteren bevorzugten Ausführungsform weist der Duftstoff eine relative Dichte (bei 20°C) auf, die zwischen 0,90 und 0,95, bevorzugt zwischen 0,91 und 0,94 liegt (bestimmt jeweils gem. Ph.Eur.2.2.5_d20)

Besonders bevorzugt enthält der Duftstoff Ethanol. Bevorzugt liegt ein Ethanolanteil dabei zwischen 20 (Vol)% und 50 (Vol)%, bevorzugt zwischen 25 (Vol)% und 45 (Vol)%, bevorzugt zwischen 30 (Vol)% und 40 (Vol)% und besonders bevorzugt zwischen 33(Vol) % und 38 (Vol)% und besonders bevorzugt zwischen 34(Vol)% und 37(Vol)% und besonders bevorzugt zwischen 35(Vol)% und 36 (Vol), jeweils angegeben als Destillation_Vol%.

Bei einer weiteren bevorzugten Ausführungsform enthält der Duftstoff flüchtige Komponenten (VOC , Volatile Organic Compound). Bevorzugt ist der Volumenanteil dieser Komponenten größer als 25%, bevorzugt größer als 28%, bevorzugt größer als 30% und besonders bevorzugt größer als 31%. Bevorzugt ist der Volumenanteil dieser Komponenten kleiner als 40%, bevorzugt kleiner als 37%, bevorzugt kleiner als 35% und besonders bevorzugt kleiner als 33% und besonders bevorzugt kleiner als 32%.

Bevorzugt ist der Duftstoff frei von Nanomaterialien (gem. Verordnung (EG) 1223/2009 sowie der Empfehlung (2022/C 229/01). Weiterhin ist der Duftstoff nicht unter Zugabe von synthetischem Polymer Mikroplastik gemäß der Verordnung (EU) 2023/2055 der Kommission vom 25. September 2023 zur Änderung des Anhangs XVII der Verordnung (EG) Nr. 1907/2006 hergestellt.

Bei einer weiteren bevorzugten Ausführungsform ist der Duftstoff ein flüssiger Duftstoff. Hierdurch wird die Zugabe zu dem Basismittel erleichtert.

Bei einer weiteren bevorzugten Ausführungsform ist der Duftstoff dem Lack oder der Farbe und insbesondere dem Basismittel in einer Konzentration und/oder einem Anteil zugesetzt, welcher -insbesondere bezogen auf die Masse- größer ist als 0,1%, bevorzugt größer als 0,2%, bevorzugt größer als 0,3%.

Bei einer weiteren bevorzugten Ausführungsform ist der Duftstoff dem Lack oder der Farbe und insbesondere dem Basismittel in einer Konzentration zugesetzt, welcher -insbesondere bezogen auf die Masse des Basismittels kleiner ist als 5%, bevorzugt kleiner als 4%, bevorzugt kleiner als 3%, bevorzugt kleiner als 2% und besonders bevorzugt kleiner als 1% und besonders bevorzugt kleiner als 0,8% und besonders bevorzugt kleiner als 0,7%.

Diese Anteile haben sich in umfangreichen Versuchsreihen als geeignet erwiesen, um über einen Zeitraum von wenigstens 1 Woche, bevorzugt von mehr als 10 Tagen in ausreichender Weise Geruchsbeeinträchtigungen durch den Lack oder die Farbe zu überdecken.

Bei einer bevorzugten Ausführungsform ist der Duftstoff aus einer Gruppe von Duftstoffen ausgewählt ist, welche Magnolienduft, Vanilleduft, Apfelduft, Orangeduft, Limettenduft und dergleichen oder Kombinationen hieraus enthält. Die Anmelderin ermittelte in unterschiedlichen Versuchsreihen, dass diese Duftstoffe gerade auch in Verbindung mit Lacken oder Farben, die an Innenoberflächen aufgetragen werden als besonders angenehm empfinden.

Bei einer weiteren bevorzugten Ausführungsform ist enthält Duftstoff wenigstens ein pflanzliches Extrakt. Dies bedeutet, dass der Duftstoff bevorzugt pflanzliche Aromastoffe enthält. Es wäre alternativ auch denkbar, synthetische Aromastoffe im Rahmen der vorliegenden Erfindung zu verwenden. Beispielsweise enthält Vanille-Aromakonzentrat als Hauptbestandteil Vanillin. Neben der Extraktion aus Vanilleschoten ist es technisch auch möglich, Vanillin synthetisch herstellen und beispielsweise eine Ethanol-Lösung hiervon als Duftstoff einzusetzen.

So kann der Duftstoff beispielsweise ein Vanille - Aromakonzentrat, ein Apfel - Aromakonzentrat oder ein Magnolien - Aromakonzentrat oder auch Mischungen aus solchen Aromakonzentraten enthalten.

Bei einer bevorzugten Ausführungsform können ätherische Öle als Duftstoff oder als Bestandteile des Duftstoffes Anwendung finden. Bevorzugt umfasst Magnolien-Aromakonzentrat eine Vielzahl solcher ätherischen Öle, wie beispielsweise Magnolol, Linalylacetat und andere Monoterpenoid-Ester. Es wäre auch hier denkbar, neben den pflanzlichen Extrakten Verbindungen wie Magnolol oder Linalylacetat synthetisch herzustellen und als Duftstoff zu verwenden.

Bevorzugt liegt ein Gewichtsanteil von Vanillin in dem Duftstoff höher als 5%, bevorzugt höher als 7% und besonders bevorzugt höher als 10% und besonders bevorzugt höher als 12%. Bevorzugt liegt ein Gewichtsanteil von Vanillin in dem Duftstoff unterhalb 30%, bevorzugt unterhalb 28%, bevorzugt unterhalb 26%, bevorzugt unterhalb 24%.

Bei einer weiteren bevorzugten Ausführungsform enthält der Duftstoff Butandion. Bevorzugt liegt ein Gewichtsanteil von Butandion oberhalb 0,1%. Bevorzugt liegt ein Gewichtsanteil von Butandion in dem Duftstoff unterhalb 1%.

Besonders bevorzugt liegt ein Dampfdruck des Duftstoffes (bei 50°C) zwischen 800hPa und 12hPa, bevorzugt zwischen 900hPa und 1100hPa und besonders bevorzugt zwischen 950hPa und 1050hPa.

Besonders bevorzugt ist der Duftstoff leicht biologisch abbaubar. Bevorzugt sind wenigstens 90% des Duftstoffes leicht biologisch abbaubar, bevorzugt wenigstens 92%, bevorzugt wenigstens 94%, bevorzugt wenigstens 96%, bevorzugt wenigstens 98% und besonders bevorzugt wenigstens 99%.

Bei einer besonders bevorzugten Ausführungsform enthält der Duftstoff ein Vanille Aromakonzentrat. Dieses Konzentrat enthält bevorzugt mehrere Bestandteile, die aus einer Gruppe von Bestandteilen ausgewählt sind, welche Acetylcedren, Amylsalicat, Anethol, Benaldehyd, Campher, beta-Caryophylen, Carvon, Dimethyl Phenethyl Azetat, Hexadecanolactone, Hexamethylindeopyran, Linalyl Azetat, Menthol, Methyl Salicycat, Trimethylcyclopentenyl Methylisopentenol, Salicylaldehyd, Santalol, Slalerol, Terpineol, Tetramethyl acetyloctahydronaphthalene, und Trimethylbenzenepropanol.

Bei einer weiteren bevorzugten Ausführungsform enthält das Vanille Aroma Vanillin. Bevorzugt ist der (Volumen- oder Gewichts-) Anteil von Vanillin höher 10%, bevorzugt höher als 12%, bevorzugt höher als 13% und besonders bevorzugt höher als 14%.

Bevorzugt ist der (Volumen- oder Gewichts-) Anteil von Vanillin geringer als 30%, bevorzugt geringer als 25%, bevorzugt geringer als 20% und besonders bevorzugt geringer als 16%.

Bei einer bevorzugten Ausführungsform ist der Duftstoff der Farbe oder dem Lack derart zugesetzt, dass er wenigstens zwei Wochen nach dem Auftragen des Lackes oder der Farbe (insbesondere als Geruch) wahrnehmbar ist

Die Anmelderin ermittelte, dass dieser Zeitraum in der Regel ausreichend ist, um von dem Lack oder der Farbe ausgehende unangenehme Gerüche ausreichend zu überdecken.

Bei einer weiteren erfindungsgemäßen Ausgestaltung umfasst der auf einem Acrylat basierende Lack oder die Farbe zur Auftragung auf Oberflächen als ein Hitze-, Kälte-, Bakterien-, Viren- und/oder Lotuseffekt- Schutzschicht zumindest ein Basismittel in flüssiger oder zähflüssiger Form, zum Beispiel Wasser, in welchem Acrylatpartikel zur Bildung eines Dispersionsgemisches eingefügt sind.

Bevorzugt haben diese Acrylatpartikel einen im Wesentlichen kugelförmige Gestalt. Bevorzugt weisen diese Acrylatpartikel einen Durchmesser auf, der größer ist als 5µm, bevorzugt größer als 10µm, bevorzugt größer als 15µm. Bei einer weiteren bevorzugten Ausführungsform weisen diese Acrylatpartikel einen Durchmesser auf, der kleiner ist als 70 µm, bevorzugt kleiner als 50 µm, bevorzugt kleiner als 40 µm, bevorzugt kleiner als 30 µm und besonders bevorzugt kleiner als 25 µm.

Bevorzugt weist der auf dem Acrylat basierende Lack oder die Farbe ein Acrylatbindemittel auf. Bevorzugt ist ein Anteil dieses Acrylatbindemittels in dem Lack oder der Farbe höher als 20%, bevorzugt höher als 30% und bevorzugt höher als 40%. Bevorzugt ist ein Anteil dieses Acrylatbindemittels in dem Lack oder der Farbe geringer als 90%, bevorzugt geringer als 80% und besonders bevorzugt geringer als 70%.

Besonders bevorzugt handelt es sich bei den Acrylatpartikeln wenigstens teilweise um Hohlkörper. Besonders bevorzugt handelt es sich bei den Acrylatpartikel um Hohlkugeln oder Körper welche annähernd die Gestalt von Hohlkugeln aufweisen.

Bevorzugt ist je nach Partikelgröße, Partikelverteilung und/oder nach zumindest einem der folgenden Acrylatpartikel-Parameter wie Dichte, Viskosität, PH, Shore A-Härte, Haftungswiderstand, Rissüberbrückung, Bruchdehnung, Wasserdampf, Durchlässigkeit, Abriebklasse, Deckkraftklasse, Wärmereflexion, Wärmeleitfähigkeit, Trocknungszeit, nach den Eigenschaften eines Hitze-, Kälte-, Bakterien- und Viren- und/oder Lotuseffektschutzes unterschieden.

Durch die Zugabe der Acrylatpartikel ergibt sich weiterhin eine geringere Dichte und/oder ein geringeres Gewicht des Lackes bzw. der Farbe.

Die vorliegende Erfindung ist weiterhin auf einen Acrylat basierenden Lack oder eine Farbe zur Auftragung auf Oberflächen als ein Hitze- Kälte- Bakterien- und Viren und/oder Lotuseffektschutzschicht gerichtet, welcher zumindest ein Basismittel in flüssiger oder zähflüssiger Form, zum Beispiel Wasser, in welchem Acrylatpartikel zur Bildung einer Dispersion eingefügt sind aufweist.

Bevorzugt liegt die Dichte des Lackes oder der Farbe zwischen 1,01 g/cm3 und 1,1 g/cm3 liegt und/oder die Shore A-Härte liegt zwischen 65% und 71% und/oder der Haftungswiderstand liegt zwischen 63% und 72% und/oder die Wärmeleitfähigkeit liegt zwischen 0,07 W/mK und 0,11 W/mK .

Dabei wird bevorzugt die Dichte des Lackes oder der Farbe bevorzugt nach DIN EN ISO 1183-1 (2019-09) bestimmt (Kunststoffe - Bestimmung der Dichte und der relativen Dichte (mit Wasser als Flüssigkeit)). Diese Norm beschreibt das Verfahren zur Bestimmung der Dichte von Kunststoffen mittels der Archimedischen Methode (Verdrängung von Wasser).

Bevorzugt wird die Shore A Härte gem. DIN ISO 7619-1 (2012-02) bestimmt: (Kunststoffe - Bestimmung der Härte - Teil 1: Bestimmung der Shore-Härte (Shore A)). Diese Norm beschreibt das Verfahren zur Bestimmung der Shore A Härte von Gummi und elastischen Kunststoffen. Die Härte wird mit einem Shore-Härteprüfgerät gemessen, bei dem eine Nadel mit einer definierten Kraft in das Material eingedrückt wird und der Eindringwiderstand gemessen wird.

Die Messung des Haftungswiderstands erfolgt bevorzugt gem. DIN EN 1542 (1999-07): Prüfung von Beschichtungen - Bestimmung der Haftung auf Untergründen durch Zugprüfung. Diese Norm beschreibt die Methode zur Bestimmung des Haftungswiderstandes von Beschichtungen (z. B. bei Farben, Lacken oder Klebstoffen) auf verschiedenen Substraten, wobei eine Zugkraft aufgebracht wird, um die Haftung zu prüfen.

Die Messung der Wärmeleitfähigkeit erfolgt bevorzugt gem. DIN 52612: Bestimmung der Wärmeleitfähigkeit von Baustoffen und Bauteilen. Diese Norm wird für die Bestimmung der Wärmeleitfähigkeit von Materialien, insbesondere im Bauwesen, verwendet, kann aber auch für andere feste Materialien Anwendung finden.

Bei einer weiteren bevorzugten sind die Acrylatpartikel in der Basislösung in einer Menge vorhanden, die zwischen 40 und 50 % liegt (Massenverhältnis zwischen den Acrylatpartikeln und der Basislösung angeben).

Gemäß zumindest einer Ausführungsform bildet der Lack oder die Farbe eine Hitzeschutzschicht, welche dafür vorgesehen und ausgebildet ist, auf Außenflächen aufgetragen zu werden, die einen mineralischen Untergrund aufweisen, wie Betondachziegel, Tondachziegel, Faserzementdächer, Schieferdächer, Bitumendächer, oder verzinke Dächer, Betonfassaden, verputze Fassaden und/oder Holzfassaden sind, sodass ein Reflektion der Hitzestrahlung erzeugt ist, wodurch eine Wärmeentwicklung in einem Gebäude reduzierbar ist.

Im Folgenden wird ein Beispiel einer hier beschriebenen Farbe oder Lack beschrieben, welcher im Sinne der Erfindung als ein KCL Mehrwertfarben 2-K Multiprimer für verschiedene Untergründe bezeichnet wird.

Durch das Auftragen einer dünnen Schicht des hier beispielhaft beschriebenen KCL 2-K Multiprimer wird die Haftung von Farben, Lacken oder Klebstoffen verbessert und ein dauerhafter, insbesondere permanenter, Halt der Beschichtung auch auf schwer zu beschichtenden Oberflächen gewährleistet.

Bei einer weiteren bevorzugten Ausführungsform ist der Lack oder die Farbe wasserabweisend und/oder schützt vor eindringendem Wasser und verhindert Schäden durch Feuchtigkeit.

Bei einer weiteren bevorzugten Ausführungsform ist der Lack oder die Farbe sehr geschmeidig.

Bei einer weiteren bevorzugten Ausführungsform ist die Farbe oder der Lack gut deckend. Bevorzugt weist sie/er den Deckungsgrad DKK 1 auf.

Bei einer weiteren bevorzugten Ausführungsform ist die Farbe oder der Lack wärmerückstrahlend ausgebildet. Insbesondere wird Strahlung in einem Bereich von 300 nm bis 900 nm zu über 70% rückgestrahlt.

Im Rahmen eines Testvergleichs war an einen Haus der erfindungsgemäße Lack bzw. die Farbe angebracht worden und an einem anderen nicht. Es wurde mit einem elektrischen drei Tage lang geheizt und anschließend bei beiden Häusern der Stromverbrauch gemessen. Dieser lag bei dem Haus mit der erfindungsgemäßen Farbe um 12 % niedriger als bei dem Haus ohne die erfindungsgemäße Farbe.

Die Anmelderin hat ermittelt, dass diese Bereiche der Rückstrahlung einen effektiven Wärmeschutz bewirken.

Bevorzugt ist der Lack oder die Farbe schnelltrocknend und gewährleistetet so eine zügige Trocknung und Überarbeitung nach dem Auftragen.

Bevorzugt haftet der Lack oder die Farbe auf unterschiedlichsten Unterlagen, welche für Baumaterialien in Frage kommen. Die Anmelderin hat überraschenderweise festgestellt, dass auch die Verwendung der Acrylatpartikel die Haftfähigkeit nicht wesentlich beeinträchtigt.

Bei einer weiteren bevorzugten Ausführungsform weist der Lack oder die Farbe wenigstens eine Komponente auf, welche bakterien- , viren- und/oder schimmelabtötend wirkt. Besonders bevorzugte ist diese Komponente aus einer Gruppe ausgewählt, welche Biozide.... Enthält. Es handelt sich bevorzugt um ein Biozid in dem der Wirkstoff verkapselt ist. Diese Verkapselung des Wirkstoffes bewirkt dass der Wirkstoff in kleinen Etappen freigegeben wird, je nachdem wie weit sich die Kunststoffhülle um das Biozid aufgelöst hat.

Bei einer weiteren bevorzugten Ausführungsform ist der Lack oder die Farbe atmungsaktiv ausgebildet.

In zumindest einer Ausführungsform weist dieser Primer, insbesondere beispielhaft, folgende Parameter auf:

| | |
|---|---|
| Farbton | Kupferbraun |
| Konsistenz | Dickflüssig |
| Aushärtung | Lufttrocknend |
| Feststoffgehalt (ASTM, D1644/a) | 51-54% in Gewicht / 42-44% in Volumen |
| Dichte (ASTM, D1475, 20°C) | 1.12-.1.19g/cm³ |
| Überstreichbar | 24 Stunden nach dem Auftragen |
| Ausgiebigkeit | 1,5-2,01/m² |

Der 2K Multiprimer weist in zumindest einer Ausführungsform zwei Komponenten - einen Primer und einen Härter - auf.

Beim Auftragen des gemischten 2-K KCL Multiprimer kann es von Vorteil sein, eine gleichmäßige Schicht auf die Oberfläche aufzutragen. Hierzu kann ein Pinsel, eine Rolle, ein Airlessgerät und/oder eine Sprühpistole verwendet werden.

Dabei kann mit dem Auftragen des Primers an einer Ecke der Oberfläche begonnen werden und dann systematisch vorgearbeitet werden, um die gesamte Fläche abzudecken. Es muss darauf geachtet werden, den Primer gleichmäßig zu verteilen und keine Bereiche zu übersehen.

Im Folgenden wird ein Beispiel einer hier beschriebenen Farbe oder Lackes beschrieben, welcher im Sinne der Erfindung als ein KCL Mehrwertfarben Antibakteriell-Farbe für Innenwände bezeichnet wird.

Die hier beschriebene antibakterielle Schicht bietet nicht nur Schutz vor Schmutz, Feuchtigkeit, Viren, Bakterien und Schimmel, sondern fördert auch die Ästhetik und Energieeffizienz Ihrer Innenräume.
- Atmungsaktiv: Ermöglicht den Austausch von Luft, um eine gesunde Umgebung zu erhalten.
- Wasserabweisend: Schützt vor eindringendem Wasser und verhindert Schäden durch Feuchtigkeit.
- Schutzfunktion: Schützt aktiv gegen Bakterien, Viren und Schimmelsporen.
- Wasch- und lichtbeständig: Behält Farbintensität und Qualität auch bei längerer Exposition.
- Sehr geschmeidig und gut deckend: Einfach zu verarbeiten und bietet eine gleichmäßige Abdeckung.
- Wärmerückstrahlung im Gebäude: Erhöht die fühlbare Raumtemperatur während der Heizperiode bei gleicher Heizkörpereinstellung und spart somit Energiekosten.
- Gebrauchsfertig: Direkt einsatzbereit für eine unkomplizierte Anwendung.
- Verarbeitung beim Rollen oder streichen: Kein Spritzen und kein Tropfen.

In zumindest einer Ausführungsform weist diese Farbe und/oder dieser Lack, insbesondere beispielhaft, folgende Parameter auf.

| | |
|---|---|
| Basis | Reinacrylat |
| Dichte | 1,05 |
| Viskosität | Tropffest |
| PH | Wenigstens 7 und höchstens 8, z.B 7,5 |
| Shore A Härte | 68 ± 2% |
| Haftungswiderstand | 65-70 |
| Rissüberbrückung | ≥ 1 N/mm2 |
| Bruchdehnung | ≥ 2mm |
| Wasserdampfdurchlässigkeit | ≥ 260% Klasse 1 (1m) |
| Abriebklasse | 1 |
| Deckkraftklasse | 1 |
| Wärmereflexion | ≥ 95% |
| Wärmeleitfähigkeit | 0,09 W/m ° K |
| Trocknungszeit | Ca. 12 stunden je nach Witterung |

Vor dem Auftragen der Beschichtung kann eine gründliche Inspektion der zu beschichteten Innenwand stattfinden, um eventuelle Schäden oder Risse in der Wand zu identifizieren und zu beheben. Die Oberfläche ist bevorzugt im Wesentlichen staubfrei, fettfrei und sollte glatt sein, zum Beispiel ohne Risse oder Sprünge sein.

Eine Verarbeitung mit Pinsel oder Farbroller ist dabei möglich. Bevorzugt ist ein Auftrag mittels eines Farbsprühsystems, insbesondere mittels eines sogenannten Airlessgerät vorgesehen.

Während er Beauftragung kann einem Spritzwinkel von 30, 40, 50, 60, 70 sowie alle Gradzahlen dazwischen zur Horizontalen, einem Düsenquerschnitt von wenigstens 0,010 Zoll bis höchstens 0,030 Zoll, zum Beispiel 0,021 Zoll unter einem Druck von wenigstens 110 bis höchstens 130 bar die Schicht aufgetragen werden.

Beispielhafte Beschichtungsaufbauten sind wie folgt dargelegt:

| | Grundierung | Anstrich |
|---|---|---|
| Verputze Wände | Nicht notwendig | 2-Anstriche mit KCL antibakteriell ergeben den höchsten Schutz gegen Bakterien, Viren und Schimmel sowie die höchste Wärmestrahlungsreflektion. |
| | | Auftragsmenge pro Anstrich 3-5 m2/Liter |
| Rigips Wände | KCL Hitzeschutz 1:1 mit Wasser verdünnen und auf direkt auf die Wand auftragen | 2-Anstriche mit KCL antibakteriell ergeben den höchsten Schutz gegen Bakterien, Viren und Schimmel sowie die höchste Wärmestrahlungsreflektion. |
| | | Auftragsmenge pro Anstrich 3-5 m2/Liter |
| Raufasertapete | Nicht notwendig | 2-Anstriche mit antibakteriell ergeben den höchsten Schutz gegen Bakterien, Viren und Schimmel sowie die höchste Wärmestrahlungsreflektion. |
| | | Auftragsmenge pro Anstrich 3-5 m2/Liter |
| Spanplatten und Holzpaneele | KCL Hitzeschutz 1:1 mit Wasser verdünnen und auf direkt auf die Wand auftragen | 2-Anstriche mit KCL antibakteriell ergeben den höchsten Schutz gegen Bakterien, Viren und Schimmel sowie die höchste Wärmestrahlungsreflektion. |
| | | Auftragsmenge pro Anstrich 3-5 m2/Liter |
| Jegliche Art von Altanstrichen | Nicht notwendig | 2-Anstriche mit KCL antibakteriell ergeben den höchsten Schutz gegen Bakterien, Viren und Schimmel sowie die höchste Wärmestrahlungsreflektion. |
| | | Auftragsmenge pro Anstrich 3-5 m2/Liter |

Im Folgenden wir ein Beispiel einer hier beschriebenen Farbe oder Lackes beschrieben, welcher im Sinne der Erfindung als ein KCL Mehrwertfarben mit Hitzeschutzfunktion für Dächer und Fassaden-Farbe für Innenwände bezeichnet wird.

KCL Hitzeschutz und/oder der hier beschriebene Lack oder die hier beschriebene Farbe kann als präventive Maßnahme gegen extreme Witterungsbedingungen eingesetzt werden. Neben dieser Schutzfunktion bietet die Farbe in zumindest einer Ausführungsform einen UV-Schutz sowie einen Schutz für Farbe und Glanz. Die Anwendung ist auf allen mineralischen Untergründen wie Betondachziegel, Tondachziegel, Faserzementdächer, Schieferdächer, Bitumendächer, verzinkte Dächer, Betonfassaden, verputze Fassaden, Holzfassaden möglich. Ebenso kann sie auf glasierten, hydrophobierten und engobierten Dachziegeln sowie Edelstahldächern und Edelstahlfassaden verwendet werden. Es kann zuvor eine vorherige Behandlung der Oberfläche mit 2-K Epoxid-Harz als eine Grundierung durchgeführt werden.

KCL Hitzeschutz und/oder der hier beschriebene Lack oder die hier beschriebene Farbe bietet im Sommer die Reflektion der Hitzestrahlung, wodurch die Wärmeentwicklung im Gebäude reduziert wird. Im Winter verstärkt die Beschichtung die wärmeregulierende Wirkung des Daches oder einer Fassade, besonders in Verbindung mit einer Dach- oder Fassadendämmung.
- Atmungsaktiv: Ermöglicht den Austausch von Luft, um eine gesunde Umgebung zu schaffen.
- Wasserabweisend: Schützt vor eindringendem Wasser und verhindert Schäden durch Feuchtigkeit.
- Umweltfreundlich: Erfüllt Umweltschutzstandards und minimiert den ökologischen Fußabdruck.
- Wasch- und lichtbeständig: Behält Farbintensität und Qualität auch bei längerer Exposition.
- Sehr geschmeidig und gut deckend: Einfach zu verarbeiten und bietet eine gleichmäßige Abdeckung.
- Wärmerückstrahlung im Sommer: Reduziert die Wärmeentwicklung im Gebäude während der warmen Jahreszeit. Spart Energiekosten, wenn Klimaanlagen zum Einsatz kommen.
- Hohe Wetter- und Wasserbeständigkeit: Schützt zuverlässig vor den Einflüssen von Witterung und Wasser.
- Hohe UV-Beständigkeit: Behält langfristig Farb- und Materialqualität bei.
- Kälte- & Hitzefest: Hält extremen Temperaturen stand.
- Hohe Beständigkeit gegen Algen und Moose: Verhindert das Wachstum unerwünschter Organismen.
- Gebrauchsfertig: Direkt einsatzbereit für eine unkomplizierte Anwendung.
- Schnelle Trocknung: Gewährleistet eine zügige Aushärtung nach dem Auftragen

In zumindest einer Ausführungsform weist diese Farbe und/oder dieser Lack, insbesondere beispielhaft, folgende Parameter auf.

| | |
|---|---|
| Basis | Reinacrylat |
| Dichte | 1,05 |
| Viskosität | Tropffest |
| PH | Wenigstens 7 und höchstens 8, z.B 7,5 |
| Shore A-Härte | 68 ± 2% |
| Haftungswiderstand | 65-70 |
| Rissüberbrückung | ≥ 1 N/mm2 |
| Bruchdehnung | ≥ 2mm |
| Wasserdampf | ≥ 260% |
| Durchlässigkeit | Klasse 1 (1m) |
| Wasserabsorption | <0,1 kg/m2. H0,5 |
| UV-Widerstand | Keine Risse |
| Wärmereflexion | ≥ 95% |
| Wärmeleitfähigkeit | 0,09 W/m ° K |
| Trocknungszeit | ca. 12 Stunden je nach Witterung |

Vor dem Auftragen der Beschichtung kann eine gründliche Inspektion des Daches oder der Fassade erfolgen, um eventuelle Schäden an Dachziegeln, in Regenrinnen oder Risse in der Fassade zu identifizieren und zu beheben. Mithilfe eines Hochdruckreinigers, welcher eine Dreckfräse aufweist oder eine solche bildet, sollten Algen- und Moosbewuchs, Schmutz sowie lose Teile entfernt werden.

Nach dem Reinigen kann es vorteilhaft sein, dass der Untergrund trocken, sauber und stabil ist. Etwaige grobe Verschmutzungen, die als trennende Substanz wirken könnten und später zu Rissen oder Abplatzungen führen könnten, sollten größtmöglich entfernt werden.

Aufgetragen werden kann die Schicht mittels einer Bürste oder eines Farbrollers.Bevorzugt ist ein Auftrag mittels eines Farbsprühsystems, insbesondere mittels eines sogenannten Airlessgerät vorgesehen.

Während der Beauftragung kann einem Spritzwinkel von 30, 40, 50, 60, 70 sowie alle Gradzahlen dazwischen zur Horizontalen, einem Düsenquerschnitt von wenigstens 0,010 Zoll bis höchstens 0,030 Zoll, zum Beispiel 0,021 Zoll unter einem Druck von wenigstens 110 bis höchstens 130 bar die Schicht aufgetragen werden.

Beispielhafte Beschichtungsaufbauten sind wie folgt dargelegt:

| | Grundierung | Anstrich |
|---|---|---|
| Betondachsteine | KCL 2-K Multiprimer. 1-Schicht 400 ml/m2 | 2-Schichten KCL Hitzeschutz für Dächer ergeben den höchsten Schutz und die höchste Wärmestrahlungsreflektion |
| | | Auftragsmenge 800 ml/ m2 Schicht 1 und 800 ml/ m2 Schicht 2. Zusammen 1.600 ml/m2 |
| Tonziegel | KCL 2-K Multiprimer. 1-Schicht 400 ml/m2 | 2-Schichten KCL Hitzeschutz für Dächer ergeben den höchsten Schutz und die höchste Wärmestrahlungsreflektion |
| | | Auftragsmenge 800 ml/ m2 Schicht 1 und 800 ml/ m2 Schicht 2. Zusammen 1.600 ml/m2. |
| Faserzementplatten / Eternit Wellplatten | Nicht notwendig | 2-Schichten KCL Hitzeschutz für Dächer ergeben den höchsten Schutz und die höchste Wärmestrahlungsreflektion |
| | | Auftragsmenge 800 ml/ m2 Schicht 1 und 800 ml/ m2 Schicht 2. Zusammen 1.600 ml/m2. |
| | | Bei asbesthaltigen Untergründen TRGS 519 beachten. |
| Engobierten oder glasierte Tonziegeln | Besonders bevorzugt KCL 2-K Multiprimer. 1-Schicht 400 ml/m2 | 2-Schichten KCL Hitzeschutz für Dächer ergeben den höchsten Schutz und die höchste Wärmestrahlungsreflektion |
| | | Auftragsmenge 800 ml/ m2 Schicht 1 und 800 ml/ m2 Schicht 2. Zusammen 1.600 ml/m2. |
| "Alt" verputzte Hausfassaden | Nicht notwendig | 2-Schichten KCL Hitzeschutz für Fassaden ergeben den höchsten Schutz und die höchste Wärmestrahlungsreflektion |
| | | Auftragsmenge 200 ml/ m2 Schicht 1 und 200 ml/ m2 Schicht 2. Zusammen 400 ml/m2. |
| Frisch verputzte Hausfassaden | KCL Hitzeschutz 1:1 mit Wasser verdünnen und dann 1-Schicht auftragen 200 ml/m2 | 2-Schichten KCL Hitzeschutz für Fassaden ergeben den höchsten Schutz und die höchste Wärmestrahlungsreflektion Auftragsmenge 200 ml/ m2 Schicht 1 und 200 ml/ m2 Schicht 2. Zusammen 400 ml/m2. |
| Holzfassaden | KCL Hitzeschutz 1:1 mit Wasser verdünnen und dann 1-Schicht auftragen 200 ml/m2 | 2-Schichten KCL Hitzeschutz für Fassaden ergeben den höchsten Schutz und die höchste Wärmestrahlungsreflektion Auftragsmenge 200 ml/ m2 Schicht 1 und 200 ml/ m2 Schicht 2. Zusammen 400 ml/m2. |

Im Folgenden wird ein Beispiel einer hier beschriebenen Farbe oder Lackes beschrieben, welcher im Sinne der Erfindung als ein KCL Mehrwertfarben mit Kälteschutzfunktion für Innenwände-Farbe für Innenwände bezeichnet wird.

Die KCL Kälteschutz erfüllt nicht nur das Ziel, eine Farbe zu schaffen, die nicht nur Oberflächen schützt und verschönert, sondern auch aktiv dazu beiträgt, CO2 zu reduzieren und die Energiekosten zu optimieren.
- Atmungsaktiv: Ermöglicht den Austausch von Luft, um eine gesunde Umgebung zu schaffen.
- Wasserabweisend: Schützt vor eindringendem Wasser und verhindert Schäden durch Feuchtigkeit.
- Umweltfreundlich: Erfüllt Umweltschutzstandards und minimiert den ökologischen Fußabdruck.
- Wasch- und lichtbeständig: Behält Farbintensität und Qualität auch bei längerer Exposition.
- Sehr geschmeidig und gut deckend: Einfach zu verarbeiten und bietet eine gleichmäßige Abdeckung.
- Wärmerückstrahlung im Gebäude: Erhöht die fühlbare Raumtemperatur während der Heizperiode bei gleicher Heizkörpereinstellung und spart somit Energiekosten.
- Gebrauchsfertig: Direkt einsatzbereit für eine unkomplizierte Anwendung.
- Verarbeitung beim Rollen oder streichen: Kein Spritzen und kein Tropfen.

Schnelle Trocknung: Gewährleistetet eine zügige Trocknung und Überarbeitung nach dem Auftragen.

In zumindest einer Ausführungsform weist diese Farbe und/oder dieser Lack, insbesondere beispielhaft, folgende Parameter auf:

| | |
|---|---|
| Basis | Reinacrylat |
| Dichte | 1,05 |
| Viskosität | Tropffest |
| PH | Wenigstens 7 und höchstens 8, z.B 7,5 |
| Shore A-Härte | 68 ± 2% |
| Haftungswiderstand | 65-70 |
| Rissüberbrückung | ≥ 1 N/mm2 |
| Bruchdehnung | ≥ 2mm |
| Wasserdampf | ≥ 260% |
| Durchlässigkeit | Klasse 1 (1m) |
| Abriebklasse | 1 |
| Deckkraftklasse | 1 |
| Wärmereflexion | ≥ 95% |
| Wärmeleitfähigkeit | 0,09 W/m ° K |
| Trocknungszeit | ca. 12 Stunden je nach Witterung |

Vor dem Auftragen der Beschichtung kann eine gründliche Inspektion der zu beschichteten Innenwand stattfinden, um eventuelle Schäden oder Risse in der Wand zu identifizieren und zu beheben. Die Oberfläche ist bevorzugt im Wesentlichen staubfrei, fettfrei und sollte glatt sein, zum Beispiel ohne Risse oder Sprünge sein.

Aufgetragen werden kann die Schicht mittels einer Bürste oder eines Farbrollers. Bevorzugt ist ein Auftrag mittels eines Farbsprühsystems, insbesondere mittels eines sogenannten Airlessgerät vorgesehen.

Während der Beauftragung kann einem Spritzwinkel von 30, 40, 50, 60, 70 sowie alle Gradzahlen dazwischen zur Horizontalen, einem Düsenquerschnitt von wenigstens 0,010 Zoll bis höchstens 0,030 Zoll, zum Beispiel 0,021 Zoll unter einem Druck von wenigstens 110 bis höchstens 130 bar die Schicht aufgetragen werden
Beispielhafte Beschichtungsaufbauten sind wie folgt dargelegt:

| | Grundierung | Anstrich |
|---|---|---|
| Verputze Wände | Nicht notwendig | 2-Anstriche mit KCL Kälteschutz ergeben die höchste Wärmestrahlungsreflektion. |
| | | Auftragsmenge pro Anstrich: 3-5 m2/Liter |
| Rigips Wände | KCL Hitzeschutz 1:1 mit Wasser verdünnen und auf direkt auf die Wand auftragen | 2-Anstriche mit KCL Kälteschutz ergeben die höchste Wärmestrahlungsreflektion. |
| | | Auftragsmenge pro Anstrich: 3-5 m2/Liter |
| Raufasertapete | Nicht notwendig | 2-Anstriche mit KCL Kälteschutz ergeben die höchste Wärmestrahlungsreflektion. |
| | | Auftragsmenge pro Anstrich: 3-5 m2/Liter |
| Spanplatten und Holzpaneele | KCL Hitzeschutz 1:1 mit Wasser verdünnen und auf direkt auf die Wand auftragen | 2-Anstriche mit KCL Kälteschutz ergeben die höchste Wärmestrahlungsreflektion. |
| | | Auftragsmenge pro Anstrich: 3-5 m2/Liter |
| Jegliche Art von Altanstrichen | Nicht notwendig | 2-Anstriche mit KCL Kälteschutz ergeben die höchste Wärmestrahlungsreflektion. |
| | | Auftragsmenge pro Anstrich: 3-5 m2/Liter |

Im Folgenden wird ein Beispiel einer hier beschriebenen Farbe oder Lackes beschrieben, welcher im Sinne der Erfindung als ein KCL Mehrwertfarben Lotuseffekt für Fassaden und Dächer bezeichnet wird.

KCL Lotuseffekt schützt Fassaden und Dächer vor Feuchtigkeit, indem es eine wasserabweisende Schicht auf der Oberfläche bildet. Dabei bleibt die Dampfdiffusionsfähigkeit erhalten, sodass Feuchtigkeit von innen nach außen entweichen kann. KCL Lotuseffekt basiert in zumindest einer Ausführungsform auf nanoskaligen siliziumorganischen Verbindungen, die eine hohe Wirksamkeit und Haltbarkeit gewährleisten. Es ist farblos und vergilbt nicht, wodurch die behandelten Oberflächen ihr ursprüngliches Aussehen behalten.

Darüber hinaus verbessert KCL Lotuseffekt Oberflächeneigenschaften der behandelten Materialien. Es erzeugt einen Lotuseffekt auf allen mineralischen Untergründen, der dafür sorgt, dass Wasser und Schmutz von der Oberfläche abperlen. Dadurch bleiben die Oberflächen länger sauber und sind leichter zu reinigen.

Zusätzlich bietet KCL Lotuseffekt, wie alle Produkte der KCL Serie, eine Wärmereflektion und trägt ebenso zur Energieeffizienz bei, da weniger Wärme in das Gebäude eindringt und Kühlkosten gespart werden können, insbesondere wenn Klimaanlagen zum Einsatz kommen.

Insgesamt erweitert KCL Lotuseffekt die Lebensdauer und Ästhetik von porösen Baustoffen, indem es sie vor Feuchtigkeit schützt, ihre Oberflächen auffrischt und ihnen wasserabweisende Eigenschaften verleiht.
- Atmungsaktiv: Ist Diffusion offen und verhindert somit den Stau von Feuchtigkeit.
- Wasserabweisend: Durch die verringerte Wasseraufnahme des Untergrundes werden Frost-Tau-Abplatzungen vermieden und Ausblühungen reduziert sowie Wärmeverluste, die aus Verdunstung eingedrungenen Wassers resultieren, vermieden.
- Lotuseffekt: Oberflächen bleiben länger sauber und bilden einen Selbstreinigungseffekt.
- Wärmerückstrahlung: Besitzt wie alle KCL Produkte die Eigenschaft, Wärmestrahlung zu reflektieren und ist somit die ideale Ergänzung zur KCL Produktserie.
- Gebrauchsfertig: Direkt einsatzbereit für eine unkomplizierte Anwendung. Kann bei jedem Wetter verarbeitet werden.
- Schnelle Trocknung: Gewährleistetet eine zügige Trocknung nach dem Auftragen.

In zumindest einer Ausführungsform weist diese Farbe und/oder dieser Lack, insbesondere beispielhaft, folgende Parameter auf.

| | |
|---|---|
| Farbton | weißlich |
| Konsistenz | flüssig |
| Aushärtung | Lufttrocknend |
| Feststoffgehalt (ASTM, D1644/a) | 51-54 % in Gewicht / 42-44 % in Volumen |
| Dichte (ASTM, D1475, 20°C) | 1.05-.1.1 g/cm³ |
| Überstreichbar | 24 Stunden nach dem Auftragen |
| Ausgiebigkeit | 15 - 20 m2/l |

Aufgetragen werden kann die Schicht mittels einer Bürste oder eines Farbrollers oder einer Farbspritze. Zum Beispiel ist ein Auftrag mittels eines Farbsprühsystems, insbesondere mittels eines sogenannten Airlessgerät vorgesehen.

Während er Beauftragung kann einem Spritzwinkel von 50 zur horizontalen°, einem Düsenquerschnitt von 0,021 Zoll unter einem Druck von wenigstens 110 bis höchstens 130 bar die Schicht aufgetragen werden.

Beispielhafte Beschichtungsaufbauten sind wie folgt dargelegt:
Nur auf saugfähigem Untergrund verwenden. Es sollte bis zur Sättigung auftragen werden, jedoch ohne Pfützen. Bei hochporösen Materialien im Verhältnis 1:1 mit Leitungswasser verdünnen und 1-2-mal nass in nass sättigend auftragen.

Um Glasscheiben oder andere nicht zu behandelnde Materialien zu schützen, sollten diese vor der Verarbeitung gut abgedeckt werden.

Die Arbeitsgeräte sollten sofort nach Gebrauch und vor den Pausen gründlich mit Wasser gereinigt werden.

Für eine optimale Anwendung der KCL Lotuseffekt von Höpner Lackmanufaktur ist eine gründliche Untergrundvorbereitung erforderlich. Der Untergrund muss fest, trocken und frei von Öl, Fett, Staub, Algen und Moos sein. Es dürfen keine Risse, Feuchtigkeit oder gelöste Salze in den Fugen oder dem Baustoff vorhanden sein, da dies zu Haftungsverlust und/oder Frostschäden führen kann.

Gemäß zumindest einer Ausführungsform bildet der Lack oder die Farbe eine Hitzeschutzschicht, welche dafür vorgesehen und ausgebildet ist, auf Außenflächen aufgetragen zu werden, welche glasiert, hydrophobiert und/oder engobiert sind, wie Dachziegeloberflächen, sowie Edelstahldächer und/oder Edelstahlfassaden.

Gemäß zumindest einer Ausführungsform weist der Lack oder die Farbe zumindest einen der folgenden Parameterbereiche zumindest eines der folgenden Parameter auf:

| | |
|---|---|
| Basismittel | Reinacrylat |
| Dichte [g/cm3] (ASTM, D1475, 20°C) | Wenigstens 1,01 bis höchstens 1,1, bevorzugt von 1,03 bis höchstens 1,07, zum Beispiel 1,05 |
| Viskosität | Tropffest |
| PH-Wert | Wenigstens 7 und höchstens 8, z.B 7,5 |
| Shore A-Härte | Wenigstens 66% und höchstens 70%, bevorzugt wenigstens 67% und höchstens 69%, zum Beispiel 68% Wenigstens 63% und höchstens 72%, bevorzugt wenigstens |
| Haftungswiderstand | 64% und höchstens 71 %, besonders bevorzugt wenigstens 65% und höchstens 70% |
| Rissüberbrückung | ≥ 1 N/mm2 |
| Bruchdehnung | ≥ 2mm |
| Wasserdampf | ≥ 260% |
| Durchlässigkeit | Klasse 1 (1m) |
| Wasserabsorption | <0,1 kg/m2. H0,5 |
| UV-Widerstand | Keine Risse |
| Wärmereflexion | ≥ 95% |
| Wärmeleitfähigkeit | Wenigstens 0,07 W/m ° K und höchstens 0,11 W/m ° K , be- |
| | vorzugst wenigstens 0,08 W/m ° K und höchstens 0,10 W/m ° K , zum Beispiel 0,09 W/m ° K |
| Trocknungszeit | ca. 12 Stunden je nach Witterung |

Gemäß zumindest einer Ausführungsform ist der Lack oder die Farbe ein Kälteschutz zur Auftragung auf Innenwände.

Gemäß zumindest einer Ausführungsform weist der Lack oder die Farbe zumindest einen der folgenden Parameterbereiche zumindest eines der folgenden Parameter auf:

| | |
|---|---|
| Abriebklasse | Wenigstens 1 bis höchstens 2 |
| Deckkraftklasse | Wenigstens 1 bis höchstens 2 |

Gemäß zumindest einer Ausführungsform weist der Lack oder die Farbe zur Erzeugung eines Lotuseffekts zumindest einen der folgenden Parameterbereiche zumindest eines der folgenden Parameter auf:

| | |
|---|---|
| Farbton | weißlich |
| Konsistenz | flüssig |
| Aushärtung | Lufttrocknend |
| Feststoffgehalt (ASTM, D1644/a) | Wenigstens 49% bis höchstens 56%, bevorzugt wenigstens 50 bis höchstens 57, besonders bevorzugt wenigstens 51% bis 54 % jeweils in Gewicht und/oder Wenigstens 40% bis höchstens 46%, bevorzugt wenigstens 41% bis höchstens 45%, besonders bevorzugt wenigstens 42% bis 44 % jeweils in Volumen % |
| Dichte (ASTM, D1475, 20°C) | Wenigstens 1,01 bis höchstens 1,1, bevorzugt von 1,03 bis höchstens 1,07, zum Beispiel 1,05 |
| Überstreichbar | 24 Stunden nach dem Auftragen |
| Ausgiebigkeit | Wenigstens 13 bis höchstens 22 m2/L, bevorzugt wenigstens 14 bis höchstens 21 m2/L, besonders bevorzugt wenigstens 15 - 20 m2/L |

Gemäß zumindest einer Ausführungsform weist der Lack oder die Farbe zur Erzeugung eines verbesserten Haftgrundes für das nachfolgende Auftragen von Farben etc. dieser ein zweikomponentiger Acryl-Polyurethanlack ist oder umfasst und zumindest einen der folgenden Parameterbereiche zumindest eines der folgenden Parameter auf:

| | |
|---|---|
| Farbton | Kupferbraun |
| Konsistenz | Dickflüssig |
| Aushärtung | Lufttrocknend |
| Feststoffgehalt (ASTM, D1644/a) | Wenigstens 49% bis höchstens 56%, bevorzugt wenigstens 50 bis höchstens 57, besonders bevorzugt wenigstens 51% bis 54 % jeweils in Gewicht und/oder Wenigstens 40% bis höchstens 46%, bevorzugt wenigstens 41% bis höchstens 45%, besonders bevorzugt wenigstens 42% bis 44 % jeweils in Volumen % Wenigstens 1,10 bis höchstens 1,21, bevorzugt von 1,11 |
| Dichte (ASTM, D1475, 20°C) | bis höchstens 1,020, besonders bevorzugt wenigstens 1.12 bis höchstens 1.19g/cm³ |
| Überstreichbar | 24 Stunden nach dem Auftragen |
| Ausgiebigkeit | Wenigstens 1,3 bis höchstens 2,2 m2/L, bevorzugt wenigstens 1,4 bis höchstens 2,1 m2/L, besonders bevorzugt wenigstens 1,5 - 2,01 m2/L |

Gemäß zumindest einer Ausführungsform ist das Verfahren zur Aufbringung eines Lackes und/oder einer Farbe gekennzeichnet, durch die Schritte: Bereitstellen einer Untergrundoberfläche sowie Aufbringen des Lackes oder der Farbe, insbesondere durch Pinselstrick oder einem Sprühnebel. Dabei sind für das Verfahren die gleichen Vorteile und Merkmale offenbart, wie für den hier beschriebene Lack und umgekehrt.

Gemäß zumindest einer Ausführungsform wird der Lack oder die Farbe als eine Hitze-, Kälte-, Bakterien- und Viren- und/oder Lotuseffektschutzschicht verwendet.

Insbesondere kann in dem Lack oder der Farbe ein UV-Stabilisator beigegeben sein. Dies kann dafür sorgen, dass die Farbe bei starker UV- Einstrahlung keine Risse bildet oder/und abblättert von der aufzubringenden Oberfläche.

Die vorliegende Erfindung ist weiterhin auf ein Verfahren zum Herstellen eines auf einem Acrylat basierenden Lackes oder einer Farbe und insbesondere eines Lackes oder einer Farbe der oben beschriebenen Art und mit den nachfolgenden Schritten gerichtet:
- Zur Verfügungstellen eines Basismittels in flüssiger oder zähflüssiger Form, zum Beispiel Wasser, in welches Acrylatpartikel zur Bildung einer Dispersion oder eines Dispersionsgemisches eingefügt sind und/oder eingefügt werden.

Erfindungsgemäß wird dem Lack oder der Farbe und/oder dem Basismittel ein Duftstoff zugesetzt.

Bei einem bevorzugten Verfahren handelt es sich bei dem Duftstoff um einen flüssigen Duftstoff.

Bei einem weiteren bevorzugten Verfahren wird der Duftstoff in das Basismittel eingerührt.

Bei einem einem weiteren bevorzugten Verfahren sind die Acrylatpartikel dem Basismittel bereits eingefügt bevor der Duftstoff zugesetzt wird. Es wäre jedoch auch möglich, dem Basismittel zunächst den Duftstoff zuzusetzen und anschließend die Acrylatpartikel.

Bei einem weiteren bevorzugten Verfahren werden auch die Acrylatpartikel in das Basismittel eingerührt.

Im Folgenden wird die hier beschriebene Erfindung anhand einer Figur näher beschrieben.

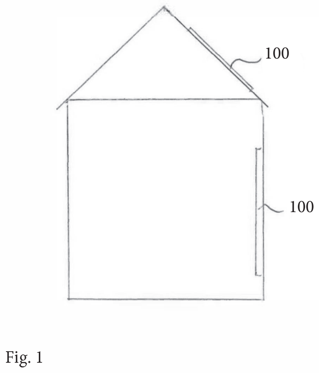

Dabei zeigt die Figur 1 ein in einem Querschnitt gezeigtes Gebäude mit einem Schrägdach, zum Beispiel einem Wohnhaus, auf dem im folgenden Beispiel außen auf ein entsprechendes vorbereitetes Dach der hier beschriebene Lack oder Farbe aufgetragen wurde, insbesondere um ein Hitzeschutzschild zu bilden, sodass das Aufgreifen der Strahlung in einem möglichst hohen Prozentanteil wieder vom Haus wegreflektieren kann, um das gesamte Haus an sich zu kühlen. Gleichzeitig ist jedoch der hier beschriebene Lack oder Farbe gezeigt, wie dieser seitlich auf eine Innenwand aufgebracht ist. **In** diesem Beispiel kann der aufgebrachte Lack Wärmestrahlung besonders gut nach innen reflektieren, sodass innen erzeugte Wärme möglichst im geringen Maße nach außen weiter transportiert wird. Entsprechendes gilt im Übrigen auch für eine gewünschte Kühlung des Hauses.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Auf einem Acrylat basierender Lack oder Farbe (100) zur Auftragung auf Oberflächen als ein Hitze-, Kälte-, Bakterien-, Viren- und/oder Lotuseffekt- Schutzschicht, umfassend zumindest ein Basismittel in flüssiger oder zähflüssiger Form, zum Beispiel Wasser, in welchem Acrylatpartikel zur Bildung einer Dispersion oder eines Dispersionsgemisches eingefügt sind,
**dadurch gekennzeichnet, dass**
die Dichte des Lackes oder der Farbe zwischen 1,01 g/cm3 und 1,1 g/cm3 liegt und die Shore A-Härte zwischen 65% und 71% liegt und der Haftungswiderstand zwischen 63% und 72% liegt und die Wärmeleitfähigkeit zwischen 0,07 W/mK und 0,11 W/mK liegt und/oder
der Lack oder die Farbe wenigstens einen Duftstoff enthält.

2. Lack oder Farbe nach Anspruch 1,
**dadurch gekennzeichnet, dass**
der Duftstoff dem Basismittel zugesetzt ist und insbesondere der Duftstoff in das Basismittel eingerührt ist und bevorzugt der Duftstoff dem Lack oder der Farbe und insbesondere dem Basismittel in einer Konzentration und/oder einem Anteil zugesetzt ist, welcher -insbesondere bezogen auf die Masse- größer ist als 0,1%, bevorzugt größer als 0,2%, bevorzugt größer als 0,3% und/oder Duftstoff dem Lack oder der Farbe und insbesondere dem Basismittel in einer Konzentration zugesetzt ist, welcher - insbesondere bezogen auf die Masse des Basismittels kleiner ist als 5%, bevorzugt kleiner als 4%, bevorzugt kleiner als 3%, bevorzugt kleiner als 2% und besonders bevorzugt kleiner als 1% und besonders bevorzugt kleiner als 0,8%.

3. Lack oder Farbe nach wenigstens einem der vorangegangenen Ansprüche,
**dadurch gekennzeichnet, dass**
der Duftstoff ein flüssiger Duftstoff ist.

4. Lack oder Farbe nach wenigstens einem der vorangegangenen Anspruch,
**dadurch gekennzeichnet, dass**
der Duftstoff aus einer Gruppe von Duftstoffen ausgewählt ist, welche Magnoliendurft, Vanilleduft, Apfelduft, Orangeduft, Limettenduft und dergleichen oder Kombinationen hieraus enthält und/oder der Duftstoff wenigstens ein pflanzliches Extrakt enthält.

5. Lack oder Farbe nach wenigstens einem der vorangegangenen Ansprüche,
**dadurch gekennzeichnet, dass**
die Dichte des Lackes oder der Farbe zwischen 1,01 g/cm3 und 1,1 g/cm3 liegt und/oder die Shore A-Härte zwischen 65% und 71% liegt und/oder der Haftungswiderstand zwischen 63% und 72% liegt und/oder die Wärmeleitfähigkeit zwischen 0,07 W/mK und 0,11 W/mK liegt.

6. Lack oder Farbe nach wenigstens einem der vorangegangenen Ansprüche,
**dadurch gekennzeichnet, dass**
der Duftstoff derart zugesetzt ist, dass er wenigstens zwei Wochen nach dem Auftragen des Lackes oder der Farbe als Geruch wahrnehmbar ist.

7. Lack oder Farbe nach wenigstens einem der vorangegangenen Ansprüche,
**dadurch gekennzeichnet, dass**
die Acrylatpartikel einen Durchmesser aufweisen, der größer ist als 5µm, bevorzugt größer als 10µm, bevorzugt größer als 15µm und/oder diese Acrylatpartikel einen Durchmesser aufweisen, der kleiner ist als 50 µm, bevorzugt kleiner als 40 µm, bevorzugt kleiner als 30 µm und besonders bevorzugt kleiner als 25 µm.

8. Lack oder Farbe nach wenigstens einem der vorangegangenen Ansprüche,
**dadurch gekennzeichnet, dass**
die Acrylatpartikel Hohlkörper und insbesondere Hohlkugeln sind.

9. Lack oder Farbe nach wenigstens einem der vorangegangenen Ansprüche,
**dadurch gekennzeichnet, dass**
der auf dem Acrylat basierende Lack oder die Farbe ein Acrylatbindemittel aufweist und bevorzugt ein Anteil dieses Acrylatbindemittels in dem Lack oder der Farbe höher ist als 20%, bevorzugt höher als 30% und bevorzugt höher als 40% und/oder ein Anteil dieses Acrylatbindemittels in dem Lack oder der Farbe geringer ist als 90%, bevorzugt geringer als 80% und besonders bevorzugt geringer als 70%.

10. Lack oder Farbe (100) nach wenigstens einem der vorangegangenen Ansprüche, **dadurch gekennzeichnet, dass**
der Lack oder die Farbe (100) ein Hitzeschutzschicht, bildet, welche dafür vorgesehen und ausgebildet ist, auf Außenflächen aufgetragen zu werden, welche glasiert, hydrophobiert und/oder engobiert sind, wie Dachziegeloberflächen, sowie Edelstahldächer und/oder Edelstahlfassaden.

11. Lack oder Farbe (100) nach zumindest einem der vorhergehenden Ansprüche, **dadurch gekennzeichnet, dass**
der Lack oder die Farbe (100) zumindest einen der folgenden Parameterbereiche zumindest eines der folgenden Parameter aufweist:
| | |
|---|---|
| Basismittel | Reinacrylat |
| Dichte [g/cm3] (ASTM, D1475, 20°C) | Wenigstens 1,01 bis höchstens 1,1, bevorzugt von 1,03 bis höchstens 1,07, zum Beispiel 1,05 |
| Viskosität | Tropffest |
| PH-Wert | Wenigstens 7 und höchstens 8, z.B 7,5 |
| Shore A-Härte | Wenigstens 66% und höchstens 70%, bevorzugt wenigstens 67% und höchstens 69%, zum Beispiel 68% Wenigstens 63% und höchstens 72%, bevorzugt wenigstens |
| Haftungswiderstand | 64% und höchstens 71%, besonders bevorzugt wenigstens 65% und höchstens 70% |
| Rissüberbrückung | ≥ 1 N/mm2 |
| Bruchdehnung | ≥ 2mm |
| Wasserdampf | ≥ 260% |
| Durchlässigkeit | Klasse 1 (1m) |
| Wasserabsorption | <0,1 kg/m2. H0,5 |
| UV-Widerstand | Keine Risse |
| Wärmereflexion | ≥ 95% |
| Wärmeleitfähigkeit | Wenigstens 0,07 W/m ° K und höchstens 0,11 W/m ° K , bevorzugst wenigstens 0,08 W/m ° K und höchstens 0,10 W/m ° K , zum Beispiel 0,09 W/m ° K |
| Trocknungszeit | ca. 12 Stunden je nach Witterung |

12. Lack oder Farbe (100) nach dem vorhergehenden Anspruch,
**dadurch gekennzeichnet, dass**
der Lack oder die Farbe (100) ein Kälteschutz zur Auftragung auf Innenwände ist.

13. Lack oder Farbe (100) nach zumindest einem der vorhergehenden Ansprüche, **dadurch gekennzeichnet, dass**
der Lack oder die Farbe (100) zumindest einen der folgenden Parameterbereiche zumindest eines der folgenden Parameter aufweist:
| | |
|---|---|
| Abriebklasse | Wenigstens 1 bis höchstens 2 |
| Deckkraftklasse | Wenigstens 1 bis höchstens 2 |

14. Lack oder Farbe nach wenigstens einem der vorangegangenen Ansprüche, geeignet zur Erzeugung eines Lotuseffekts,
**dadurch gekennzeichnet, dass**
der Lack oder die Farbe (100) zumindest einen der folgenden Parameterbereiche zumindest eines der folgenden Parameter aufweist:
| | |
|---|---|
| Farbton | Weißlich |
| Konsistenz | Flüssig |
| Aushärtung | Lufttrocknend |
| Feststoffgehalt (ASTM, D1644/a) | Wenigstens 49% bis höchstens 56%, bevorzugt wenigstens 50 bis höchstens 57, besonders bevorzugt wenigstens 51% bis 54 % jeweils in Gewicht und/oder Wenigstens 40% bis höchstens 46%, bevorzugt wenigstens 41% bis höchstens 45%, besonders bevorzugt wenigstens 42% bis 44 % jeweils in Volumen % |
| Dichte (ASTM, D1475, 20°C) | Wenigstens 1,01 bis höchstens 1,1, bevorzugt von 1,03 bis höchstens 1,07, zum Beispiel 1,05 |
| Überstreichbar | 24 Stunden nach dem Auftragen |
| Ausgiebigkeit | Wenigstens 13 bis höchstens 22 m2/L, bevorzugt wenigstens 14 bis höchstens 21 m2/L, besonders bevorzugt wenigstens 15 - 20 m2/L |

15. Verwendung des Lacks oder der Farbe (100) nach zumindest einem der vorhergehenden Ansprüche als eine Hitze-, Kälte-, Bakterien- und Viren- und/oder Lotuseffektschutzschicht.
